# EUROPÄISCHE PATENTSCHRIFT

(11) **EP 4 389 250 B1**
(45) Veröffentlichungstag und Bekanntmachung des Hinweises auf die Patenterteilung: **22.07.2026**
(21) Anmeldenummer: 22215542.6
(22) Anmeldetag: 21.12.2022
(51) Int. Cl.: B01D 15/20, B01J 49/16, B01D 15/36, B01J 39/05, B01J 41/05, B01J 47/04, B01J 49/18, C02F 1/42

(54) **VORRICHTUNG ZUR REGENERATION VON MISCHBETT-IONENAUSTAUSCHERN SOWIE ENTSPRECHENDES VERFAHREN**
DEVICE FOR REGENERATION OF MIXED-BED ION-EXCHANGERS AND PROCESS USING THE SAME
APPAREIL POUR LA RÉGÉNÉRATION DE LITS MÉLANGÉS D'ÉCHANGEURS D'IONS ET PROCÉDÉ DE RÉGÉNÉRATION ASSOCIÉ

(43) Veröffentlichungstag der Anmeldung: 26.06.2024
(73) Patentinhaber: MionTec GmbH, 51377 Leverkusen (DE)
(72) Erfinder: Mauer, Dieter, 51377 Leverkusen (DE)
(74) Vertreter: Erbacher, Martin

(56) Entgegenhaltungen:
- EP-A2- 0 166 282
- WO-A1-93/16959
- CH-A5- 658 796
- US-A- 3 711 401

## Beschreibung

Die vorliegende Erfindung geht aus von einer Vorrichtung zur Regeneration von Mischbett-Ionenaustauschern, bei welchen Mischungen aus starksauren (KAT) und starkbasischen (AN) Harztypen in ähnlichem, aber definiertem Volumenverhältnis verwendet werden. Bei der Beladung müssen diese beiden Typen gut gemischt in der Beladesäule vorliegen, während sie bei der Regeneration zuerst in die KAT- und AN-Teilvolumina getrennt und dann mit Säure und Lauge regeneriert werden müssen. Diese Technologie ist seit Jahrzenten bekannt und im technischen Einsatz.

Grundsätzlich gibt es drei aus dem Stand der Technik bekannte Vorgehensweisen, die eigentlich gegensätzlichen Anforderungen an die gute Vermischung von KAT und AN während der Beladung und die gute Trennung der beiden Harzanteile während der Regeneration zu realisieren.

Eine erste Vorgehensweise sieht ein intern regeneriertes Mischbett (MB) mit aufwändiger Verrohrung für alle notwendigen Schritte vor. Das Harz verbleibt immer in derselben Säule und wird darin beladen, getrennt, regeneriert und erneut gemischt.

Eine zweite Vorgehensweise betrifft eine Verbindung von mehreren Arbeitssäulen nur für die Beladung und einer oder wenigen komplett für alle Regenerierschritte ausgestatteten Regeneriersäulen in einem Betrieb über Harztransportleitungen. Dieser Typ ist eher in Großanlagen anzutreffen.

Ferner gibt es als dritte Vorgehensweise die Nutzung der gemischten Harze in transportablen Kleinsäulen (Kartuschensysteme bis ca. 100 L Harzvolumen) und den Transport der beladenen (verbrauchten) Säulen zu einem Regenerierbetrieb, in dem die Harze aus den Säulen entnommen und in einer zentralen Regenerieranlage zusammen mit anderen Füllungen in großer Menge regeneriert und erneut gemischt und abgefüllt werden. Die vorliegende Erfindung betrifft eine Weiterentwicklung dieser dritten Vorgehensweise.

Die Regeneration wird nach dem Stand der Technik wie folgt gelöst:
1. Übernahme der beladenen Harze von den Kunden bzw. den Transporteuren und Zusammenstellung einer Chargengröße passend für die eigene Regeneriersäule, sowie Füllung der Säule mit möglichst exakt dieser Menge.
2. Trennung der Kationenaustauscher und Anionenaustauscher durch einen Wasserstrom in Aufwärtsrichtung. Die unterschiedlichen Dichten der Harze führen zu einer Klassierung. Die Kationenaustauscher liegen unten und die Anionenaustauscher oben in der Säule. Die Höhe der Trennschicht (nicht eindeutig getrennte Harzanteile / indifferente Mittelschicht) beträgt einige mm bis wenige cm. Bei schlechter Harzqualität oder Alterung kann es sein, dass die Höhe der indifferenten Mittelschicht viele cm hoch ist. Ebenso kann es sein, dass aufgrund von vom Soll abweichender Mischungsverhältnisse von KAT und AN durch Nachfüllung oder Entnahme von KAT die Position der Trennlinie genau auf die Höhe einer mittig angeordneten Sammeldrainage nachjustiert werden muss. Zur Erreichung einer guten Regenerierqualität ist diese Präzision notwendig.
3. Einspeisung der Säure von unten und gleichzeitige Einspeisung der Lauge von oben mit Ablauf der zusammengelaufenen Regenerate über die mittig angeordnete Sammeldrainage.
4. Einspeisen von Waschwasser gleichzeitig von unten und oben (oder Varianten mit abweichenden zeitlichen Abläufen), bis die Leitfähigkeit im Sammeldrainageablauf ausreichend niedrig ist.
5. Ablassen des Wassers in der Säule bis Harzoberkante und Mischung der gesamten Füllung durch Einblasen von Luft von unten. Hier entsteht bei unkorrekter Trennschichtlage manchmal das Problem, dass teilbeladene Harze aus der Region knapp über oder knapp unter der Sammeldrainage in der regenerierten Ware verbleiben und die Gesamtqualität einschränken. Diese "Falschbeladung" entsteht dadurch, dass KAT-Perlen, die zu hoch liegen von NaOH getroffen werden und sich dann voll mit Na⁺ beladen, oder indem zu tief liegende AN-Perlen mit HCl in die volle Cl--Form umgesetzt werden.
6. Kreislaufwäsche durch die Säule mit einer Kreislaufwaschpumpe im geschlossenen Kreislauf, bis die Leitfähigkeit im Ablauf der Spezifikation für regenerierte Ware entspricht (Die KAT-Perlen nehmen die geringen Mengen Na+ der Restlauge des AN und dieser die geringen Mengen Cl- der Restsäure aus dem KAT auf. Die H⁺ und OH⁻ neutralisieren sich). Hier gibt es auch die deutlich teurere Variante, anstelle einer Kreislaufwäsche frisches VE-Wasser zu benutzen, was jedoch nicht effektiv ist und sehr viel Abwasser erzeugt.
7. Abgabe der fertigen, gemischten Ware und Abfüllung in die Liefergebinde oder direkt in die Kartuschen, welche beim Kunden eingesetzt werden.

Diese Vorgehensweise beinhaltet verschiedene Nachteile, welche unterschiedlich stark auftreten können:
1. Die Regeneration ist prinzipiell eine Gleichstromregeneration. Diese Vorgehensweise benötigt gerade bei der hohen Regenerierqualität, die MB-Harze erreichen müssen, sehr hohe Überschüsse an Regeneriermittel. Dieser Überschuss liegt bei > 300 %, typisch sogar bis 500 % der erreichbaren Beladekapazität.
2. Das Volumenverhältnis der in die Trennsäule eingefüllten Ware muss möglichst genau stimmen, da ansonsten durch manuelles Nachfüllen oder Entnehmen von Harz nachjustiert werden muss, was als Handhabungsproblem zu sehen ist.
3. Jede unpräzise Einstellung der Trennschichtposition erzeugt ein potenzielles Qualitätsproblem bei der fertigen Ware (schlechte Ablaufqualität in der folgenden Beladung) durch die oben angesprochene "Falschbeladung".

Es gibt unterschiedliche Verfahrensvarianten, um die Trennqualität auch unter erschwerten Bedingungen zu verbessern. Z.B. ist aus der DE 1 229 046 B das Fahren von Lauge im Abstrom durch das gesamte Bett mit erneuter Trennung mit VE-Wasser im Aufstrom und anschließender Regeneration mit Säure von unten bekannt. Das Problem dabei ist die Erreichung eines ausreichend hohen Regeneriergrades der Kationenaustauscher-Seite, da diese Harze zu 10 % in die Na-Form umgewandelt sind. Bekanntermaßen ist gerade die Regenerierqualität dieser Kationenaustauscher für die spätere Ablaufqualität bei der nächsten Beladung verantwortlich. Durch diese Vorgehensweise entsteht also ein deutliches wirtschaftliches Problem.

Die Druckschriften US 3,537,989 und EP 4 874 55 A1 offenbaren jeweils den Einbau von nicht einer, sondern von drei Drainageebenen in ein intern regenerierbares Mischbett, um Säure- und Laugeüberschüsse ein weiteres Mal zu verwenden. Hierzu ist jedoch eine kompliziert aufgebaute Säule notwendig. Ebenso offenbart die EP 4 874 55 A1 keine Aussage über die erreichbare Regenerierqualität der zwischen den beiden äußeren Drainagesystemen befindlichen Mittelschicht. Diese wird dem Text nach weder regeneriert noch abgesondert und verschlechtert die Ablaufqualität im späteren Betrieb merklich.

Ein anderer in der EP 0 888 190 B offenbarter Ansatz trennt Anionenaustauscher und Kationenaustauscher in zwei getrennte Säulen durch die Trennung im Aufstrom aus einer Säule in die andere. Hierbei bleibt das Problem der indifferenten Trennung der Mittelschicht existenziell bestehen. Ebenso bleibt es bei dem Gleichstrom-Regenerierprinzip, welches hohe Regeneriermittelüberschüsse benötigt. Eine Verbundregeneration ist nicht vorgesehen.

Aus der Druckschrift CH 658 796 A5 ist ein Verfahren bekannt, welches mittels mehrerer Aktivstoffbetten zur Behandlung von flüssigen Medien dient, die mit Salzen und/oder Feststoffen verunreinigt sind. Die Aktivstoffbetten befinden sich in einem Behandlungsbehälter, der durch Filterplatten in einzelne, voneinander getrennte Behandlungskompartimente unterteilt ist. Die erschöpften Wirkstoffbetten werden jeweils portionsweise und zyklisch zur externen Regeneration abgezogen und anschließend wieder zurückgeführt. Die Druckschrift EP 0 166 282 A2 betrifft ein Aufstrom-Verfahren zur Behandlung von Flüssigkeiten in Ionenaustauschfiltern, die Kationenaustauscher und Anionenaustauscher in getrennten, übereinander angeordneten Schichten enthalten.

Es ist daher die Aufgabe der Erfindung, eine Vorrichtung zum Regenieren eines Mischbett-Ionenaustauschers und ein entsprechendes Verfahren bereitzustellen, mit welcher der Chemikalienverbrauch gesenkt und gleichzeitig die Regenerierqualität erhöht wird.

Die Aufgabe wird gelöst mit den Merkmalen der unabhängigen Ansprüche. Vorteilhafte Ausgestaltungen sind jeweils in den abhängigen Ansprüchen beschrieben.

Demgemäß ist eine Vorrichtung zur Regeneration von Mischbett-Ionenaustauschern vorgesehen, mit einer Trennsäule, welche eine starkbasische Harzfraktion und eine starksaure Harzfraktion in einem vordefinierten Volumenverhältnis zueinander sowie voneinander getrennt und übereinander angeordnet aufweist, wobei die Vorrichtung zumindest einen Harz-Transportausgang für die starkbasische Harzfraktion und einen Harz-Transportausgang für die starksaure Harzfraktion aufweist, wobei die Vorrichtung ferner zwei fluidisch mit dem Harz-Transportausgang verbundene Regeneriersäulenkaskaden aufweist, von denen jede zumindest zwei Regeneriersäulen aufweist, wobei die eine Regeneriersäulenkaskade als Anionenaustauscher-Regeneriersäulenkaskade ausgebildet ist, welche zum Regenerieren der starkbasischen Harzfraktion eingerichtet ist, und die andere Regeneriersäulenkaskade als Kationenaustauscher-Regeneriersäulenkaskade ausgebildet ist, welche zum Regenerieren der starksauren Harzfraktion eingerichtet ist.

Die erfindungsgemäße Vorrichtung weist unter anderem den Vorteil auf, dass diese sehr einfach auch nachträglich installiert werden und zudem mit verschiedenen Regeneriermedien betrieben werden kann.

Es kann vorgesehen sein, dass einer der Harz-Transportausgänge so angeordnet ist, dass dieser oberhalb einer zwischen der starkbasischen und der starksauren Harzfraktion angeordneten Trennschichtlage in die Trennsäule mündet und dadurch zum Abtransportieren der starkbasischen Harzfraktion eingerichtet ist, und der andere Harz-Transportausgang so angeordnet ist, dass dieser unterhalb der Trennschichtlage von unten in die Trennsäule mündet und dadurch zum Abtransportieren der starksauren Harzfraktion eingerichtet ist.

Ferner kann vorgesehen sein, dass die zumindest zwei Regeneriersäulen der Anionenaustauscher-Regeneriersäulenkaskade und/oder der Kationenaustauscher-Regeneriersäulenkaskade in Reihe geschaltet sind. Dabei können die Regeneriersäulenkaskaden jeweils mehr als zwei, beispielsweise drei oder vier, Regeneriersäulen aufweisen.

Ferner kann eine Steuereinheit vorgesehen sein und jede der Regeneriersäulenkaskaden kann eine Mehrzahl Ventile aufweisen, wobei durch Ansteuerung der Mehrzahl Ventile mittels der Steuereinheit die Durchströmreihenfolge der Regeneriersäulen jeder der Regeneriersäulenkaskaden veränderlich einstellbar ist. Dadurch wird die Säulenrotation auf logische Weise ermöglicht.

Die Vorrichtung kann ferner zumindest einen Waschwasserzulauf und zumindest einen Waschwasserablauf aufweisen und dazu eingerichtet sein, dass zumindest eine Regeneriersäule der Anionenaustauscher-Regeneriersäulenkaskade mit zumindest einer Regeneriersäule der Kationenaustauscher-Regeneriersäulenkaskade in einem Kreislauf gewaschen werden kann. Durch das Durchführen einer Kreislaufwäsche kann die Vorrichtung abwasser- und kostensparend betrieben werden.

Es kann zumindest eine Harztransportpumpe vorgesehen sein. Außerdem kann jede der Regeneriersäulenkaskaden einen Harzzulauf und einen Harzablauf aufweisen. Dabei können die Harzabläufe beider Regeneriersäulenkaskaden zur Mischung einer Fertigware zusammengeführt werden und die zumindest eine Harztransportpumpe derart angesteuert sein, dass ein vorbestimmtes Mischungsverhältnis von regeneriertem AN-Harz und regeneriertem KAT-Harz einstellbar ist.

Die Erfindung betrifft ferner ein Verfahren zur Regeneration von Mischbett-Ionenaustauschern, aufweisend die Schritte:
Bereitstellen einer mit einer starkbasischen Harzfraktion und einer starksauren Harzfraktion gefüllten Trennsäule für Mischbett-Ionenaustauscher, in welcher beide Harzfraktionen voneinander getrennt werden, so dass diese übereinander angeordnet sind;
Separates Überführen der starkbasischen Harzfraktion mittels eines ersten Harztransportausgangs aus der Trennsäule in eine zumindest zwei, beispielsweise in Reihe verschaltete, Regeneriersäulen aufweisende Anionenaustauscher-Regeneriersäulenkaskade und der starksauren Harzfraktion aus der Trennsäule mittels eines zweiten Harztransportausgangs in eine zumindest zwei, beispielsweise in Reihe verschaltete, Regeneriersäulen aufweisende Kationenaustauscher-Regeneriersäulenkaskade;
Regenerieren der starkbasischen Harzfraktionen in der Anionenaustauscher-Regeneriersäulenkaskade und Regenerieren der starksauren Harzfraktion in der Kationenaustauscher-Regeneriersäulenkaskade.

Das Bereitstellen kann eine Übernahme einer Charge beladener Ware, bestehend aus der starkbasischen Harzfraktion und der starksauren Harzfraktion, von einem Anliefergebinde in die Trennsäule umfassen. Das Bereitstellen kann ferner eine Trennung der Fraktionen per Klassierung durch einen Wasserstrom in Aufwärtsrichtung umfassen. Dabei darf die Trennschichtschärfe und -position relativ zur Mittelebene in gewissem Umfang sogar unpräzise erscheinen.

Das Überführen der starkbasischen und der starksauren Harzfraktion kann ferner die Entnahme von etwas weniger als der gesamten starkbasischen Harzfraktion und die Entnahme von etwas weniger als der gesamten starksauren Harzfraktion umfassen. Dabei kann eine zwischen den Harzfraktionen angeordnete indifferente Trennschicht entweder in der Trennsäule verbleiben oder separat aus der Trennsäule entfernt werden. Beispielsweise kann diese Trennschicht in einen der Trennsäule vorgelagerten Behälter zurückgeführt werden. Der der Trennsäule vorgelagerte Behälter kann eine Anliefervorlage sein, aus welcher die Trennsäule mit Harz gespeist wird. Dieser Verwurf kostet kein Regeneriermittel, da er vor der eigentlichen Regeneration erfolgt, was einen deutlichen wirtschaftlichen Vorteil darstellt. Die Trennsäule kann dazu etwas größer als die gewünschte Anlieferchargengröße dimensioniert werden. Der Behälter kann damit eine Misch- und Abfülleinrichtung sein, in welchen zum einen das regenerierte Harz aus beiden Regeneriersäulenkaskaden in einem vorbestimmten Mischungsverhältnis eingespeist wird, wodurch dieser die zum Abfüllen fertige Ware enthält, und zum anderen kann in diesen die oben genannte Trennschicht eingespeist werden. Das separate Handling der Trennschicht vermeidet die Notwendigkeit der Nachjustierung der Trennschichtposition, da, wenn die Trennsäule etwas mehr Harz als eine Chargengröße enthält, der unpräzise getrennte Teil immer zurückgegeben oder in der Säule belassen werden kann. Die Vorrichtung bzw. das Verfahren erzeugt dadurch unabhängig von der Trennqualität der Trennsäule immer perfekt regenerierte Teilmengen ohne "Falschbeladung", die nach der Mischung die heutzutage bestmögliche Ablaufqualität erzeugen.

Die Entnahme von etwas weniger als der gesamten AN-Teilmenge aus der Trennsäule kann durch einen ersten Entnahmestutzen bzw. einen Harz-Transportausgang erfolgen, der etwas oberhalb der Trennschicht liegt. Die Übergabe kann in die nächste freie AN-Regeneriersäule hinten in der AN-Säulenkaskade erfolgen. Die Entnahme von etwas weniger als der gesamten KAT-Teilmenge aus der Trennsäule kann durch einen zweiten Entnahmestutzen bzw. Harz-Transportausgang erfolgen, welcher unten bzw. am Boden der Trennsäule angeordnet ist. Die Übergabe kann in die nächste freie KAT-Regeneriersäule hinten in der KAT-Säulenkaskade erfolgen.

Das Verfahren kann ferner ein steuerungstechnisches Weiterschalten der beiden Regeneriersäulenkaskaden jeweils um eine Säule nach vorne umfassen. Dadurch können die Regeneriersäulen reihum regeneriert werden. Dadurch kann das Verfahren das Einspeisen einer frischen für die Regenerierung vorgesehenen Säure/Lauge jeweils in die zu diesem Zeitpunkt erste Säule der jeweiligen Regeneriersäulenkaskade umfassen. Dadurch erfolgt die Einspeisung stets in eine Regeneriersäule, die schon recht gut vorregeneriert ist (abhängig vom einkalkulierten realen Regeneriermittelüberschuss) und die dadurch sehr gute Regeneriergrade erreichen kann. Die hinteren Säulen können demgegenüber erst einmal vorregeneriert werden und die Regenerierqualität sich mit jedem Schritt, den eine Säule schaltungstechnisch nach vorne wandert, weiter erhöhen. Die Zahl der Säulen ist prinzipiell beliebig, erfindungsgemäß startend mit zwei. Je höher die Zahl, desto geringer kann der anzuwendende Regeneriermittelüberschuss ausfallen. Durch das steuerungstechnische Weiterschalten wird eine Säule nach der anderen befüllt bzw. entleert. Die Weiterschaltung erfolgt logisch über Ventile und nicht durch körperliches Umstellen der Säulen. Das logische Weiterschalten der Regeneriersäulenkaskade vereinfacht die Verrohrung und Ventilausstattung der Trennsäule gegenüber einer intern regenerierfähigen MB-Säule beträchtlich. Das Verfahren kann dadurch ferner leicht über Teilschritte zeitlich nacheinander innerhalb eines Rotationsschrittes automatisiert werden.

Das Regenerieren kann die Einspeisung von Regeneriermittel bezogen auf die zu erreichende Beladekapazität mit einem Regeneriermittelüberschuss zwischen 110 % und 130 % umfassen. Das Verfahren ermöglicht durch Reihenschaltung eine echte mehrstufige Verbundregeneration, welche den notwendigen Chemikalienüberschuss von 300-500 % auf 110-130 % absenkt;
Das Regenerieren kann ferner das Einspeisen von ca. 0,4-0,5 Harzvolumen bzw. Bettvolumen (BV) Waschwasser umfassen, welches vonseiten der schaltungstechnisch vorne liegenden Regeneriersäule eingespeist wird. Dadurch kann die Säure/Lauge in die hinteren Säulen verdrängt werden, ohne dort jedoch bereits verdünnt zu werden (0,4-0,5 BV entsprechen etwa dem Zwischenkugelvolumen einer Säule).

Das Regenerieren kann ferner umfassen, dass die ersten KAT- und AN-Säulen bei Bedarf noch mit einer geringen Menge Wasser direkt ins Abwasser bzw. den Waschwasserablauf nachgewaschen und dann in einen geschlossenen Kreislauf geschaltet werden. In diesem Kreislauf kann jede für die Produktspezifikation notwendige Ziel-Leitfähigkeit erreicht werden, ohne dass Abwasser erzeugt wird.

Es kann vorgesehen sein, dass jede Regeneriersäulenkaskade zumindest drei Regeneriersäulen umfasst, wobei das Verfahren ferner das zeitgleiche Regenerieren zumindest zweier der Regeneriersäulen und das Waschen der zumindest einen weiteren Regeneriersäule umfasst. Das Waschen bzw. die Kreislaufwäsche kann zeitgleich mit der Regeneration der anderen Säulen durchgeführt werden, wenn eine Säule mehr als für die Verbundregeneration notwendig in der Vorrichtung vorhanden ist. Dies erhöht die Raum-Zeit-Ausbeute der Vorrichtung bzw. des Verfahrens. Ferner kann vorgesehen sein, dass zeitgleich mit der Regeneration zumindest zweier der Regeneriersäulen das Entleeren und Neufüllen der zumindest einen weiteren Regeneriersäule erfolgt.

Das Verfahren kann ferner das Mischen der fertig regenerierten Harzfraktionen mittels zweier Harztransportpumpen umfassen. Im Zuge dessen kann ein gewünschtes Mischungsverhältnis aus starkbasischer und starksaurer Harzfraktion eingestellt werden. Die Mischung der Fertigware kann somit über eine Inline-Mischung direkt im richtigen Volumenstromverhältnis aus den Regeneriersäulen erfolgen.

Daher stellt die erfindungsgemäße Technologie eine extreme Verbesserung und Weiterentwicklung für jeden Mischbett-Regenerationsbetrieb dar.

Weitere Einzelheiten der Erfindung werden anhand der nachstehenden Figuren erläutert. Dabei zeigt:
- Fig. 1: einen typischen Aufbau einer Trenn- und Regeneriersäule nach dem Stand der Technik;
- Fig. 2: einen schematischen Aufbau einer Ausführungsform der erfindungsgemäßen Regenerationsanlage;
- Fig. 3: ein beispielhaftes RI-Fließbild einer Ausführungsform der erfindungsgemäßen Vorrichtung, beispielhaft am Teil der AN-Regeneriersäulenkaskade;
- Fig. 4: einen schematischen Aufbau einer Ausführungsform einer Trennsäule in einfach zu bauender Ausführung.

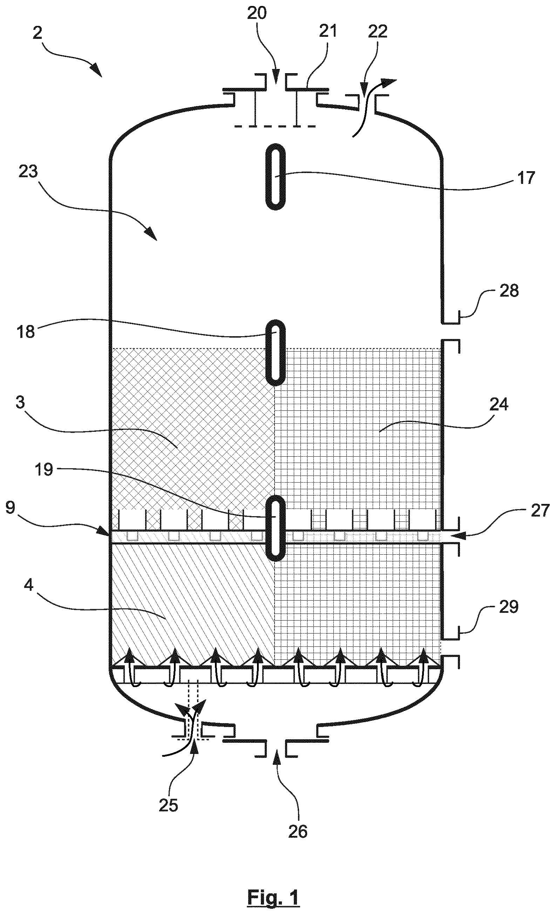

Fig. 1 zeigt einen aus dem Stand der Technik bekannten Aufbau einer Trenn- und Regeneriersäule 2. Diese weist einen Innenraum auf, welcher über einen Harztransportflansch 28 mit einer gemischten Charge beladener starksaurer und starkbasischer Harze befüllt wird, so dass nach dem Befüllen ein gemischtes Harzbett 24 vorliegt. Anschließend erfolgt eine Trennung des Kationenaustauscherharzes 4 und des Anionenaustauscherharzes 3 durch einen Wasserstrom in Aufwärtsrichtung, welcher durch einen Klassierwassereinlass 26 in die Säule 2 einströmt. Die unterschiedlichen Dichten der Harze 3, 4 führen zu einer Klassierung. Dadurch liegt die Kationenaustauscherharzfraktion 4 unten und die Anionenaustauscherharzfraktion 3 oben in der Säule 2. Die Säule 2 weist im oberen Bereich ein Fenster 17 zur Kontrolle der Rückspülgeschwindigkeit, ein unten angeordnetes Fenster 19 zur Kontrolle der Position und Schärfe der Trennschicht sowie ein dazwischen angeordnetes Fenster 18 zur Füllkontrolle des AN-Harzes 3 auf. Die Höhe der indifferenten Mittelschicht bzw. Trennschicht 9, welche nicht eindeutig getrennte Harzanteile aufweist, beträgt einige mm bis wenige cm. Zum Regenerieren erfolgt zunächst das Einspeisen von Säure von unten und gleichzeitig eine Einspeisung von Lauge von oben. Der Ablauf der zusammengelaufenen Regenerate erfolgt über die mittig angeordnete Sammeldrainage 27. Das nachfolgende Einspeisen von Waschwasser erfolgt gleichzeitig von unten und oben oder bei Varianten mit abweichenden zeitlichen Abläufen, bis die Leitfähigkeit im Sammeldrainageablauf 27 ausreichend niedrig ist. Danach wird das Wasser in der Säule 2 bis zur Harzoberkante abgelassen und eine Mischung der gesamten Füllung 3, 4 durch Einblasen von Luft über einen unten in der Säule 2 angeordneten Lufteinlass 25 vorgenommen. Die Luft entweicht über einen oben angeordneten Luftauslass 22. Anschließend erfolgt eine Kreislaufwäsche durch die Säule 2 mit einer Kreislaufwaschpumpe im geschlossenen Kreislauf, bis die Leitfähigkeit im Ablauf 27 der Spezifikation für regenerierte Ware entspricht. Nach abgeschlossener Regeneration wird die Fertigware über einen Harztransportflansch 29 aus der Säule 2 entnommen oder sie verbleibt in der Säule und die Beladung startet..

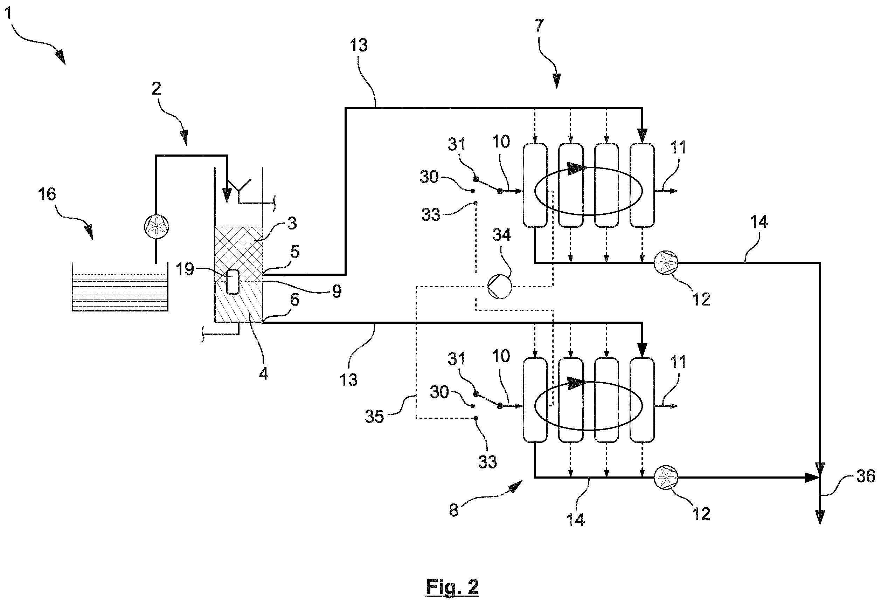

Fig. 2 zeigt einen schematischen Aufbau einer Ausführungsform der erfindungsgemäßen Vorrichtung 1 zur Regeneration von Mischbett-Ionenaustauschern. Diese weist im Wesentlichen eine Trennsäule 2 auf, welche eine starkbasische Harzfraktion 3 und eine starksaure Harzfraktion 4 in einem vordefinierten Volumenverhältnis zueinander sowie einen Harz-Transportausgang 5 für die starkbasische Harzfraktion 3 und einen Harz-Transportausgang 6 für die starksaure Harzfraktion 4 aufweist. Der Harz-Transportausgang 5 mündet etwas oberhalb der Trennschicht 9, der Harz-Transportausgang 6 unten in die Trennsäule 2. Die Vorrichtung 1 weist ferner zwei fluidisch jeweils mit den Harz-Transportausgängen 5, 6 verbundene Regeneriersäulenkaskaden 7, 8 auf. Von denen weist jede vier in Reihe verschaltete Regeneriersäulen A-D auf, wobei die in der Darstellung obere Regeneriersäulenkaskade AN-Regeneriersäulenkaskade 7 ausgebildet ist, welche zum Regenerieren der starkbasischen Harzfraktion 3 eingerichtet ist, und die andere Regeneriersäulenkaskade als KAT-Regeneriersäulenkaskade 8 ausgebildet ist, welche zum Regenerieren der starksauren Harzfraktion 4 eingerichtet ist. Die Säulenkaskaden weisen jeweils eine Mehrzahl Ventile auf, über welche die Durchströmreihenfolge der Regeneriersäulen A-D eingestellt werden kann. Diese werden im Betrieb nach und nach durchgetauscht, so dass die Regeneriersäulen A-D mit jeder Neuverschaltung in der Säulenkaskade 7, 8 eine Säulenposition nach vorne rücken. Die Überführung des Harzes erfolgt aus der Trennsäule 2 stets in die hinterste Säule der Säulenkaskade 7, 8, die Darstellung zeigt beispielhaft eine Überführung des Harzes in die Regeneriersäulen D. Über einen Laugeneingang 31 bzw. einen Säureeingang 32 erfolgt jeweilig eine Einspeisung des Regeneriermittels in die Säulenkaskaden 7, 8. Die Regeneriermittelführung erfolgt im Verbund. Das bedeutet, dass die frische Säure/Lauge 31, 32 immer in die erste Säule, bei der in Fig. 2 gezeigten Säulenverschaltung sind dies die Säulen A, eingespeist wird. Die hinteren Säulen B, C und D werden erst einmal vorregeneriert und die Regenerierqualität erhöht sich mit jedem Schritt, den eine Säule schaltungstechnisch nach vorne bzw. nach links wandert Die gestrichelten Pfeile in den Harzwegen in Fig. 2 verdeutlich, dass eine Säule nach der anderen befüllt bzw. entleert wird. Über einen Medieneingang 10 erfolgt jeweils das Einspeisen von Waschwasser 30. Dieses wird ebenfalls zunächst in die vorne liegende Säule eingespeist. Dadurch wird die Säure/Lauge in die hinteren Säulen verdrängt, ohne dort jedoch bereits verdünnt zu werden. Zum Waschen werden die beiden jeweils ersten KAT- und AN-Säulen A bei Bedarf noch mit einer geringen Menge Wasser direkt ins Abwasser 11 nachgewaschen und dann in einen geschlossenen Kreislauf bestehend aus Eingängen 33 und Kreislaufpumpe 34 geschaltet, gestrichelte Linie in Fig. 2. In diesem Kreislauf kann jede für die Produktspezifikation notwendige Ziel-Leitfähigkeit erreicht werden, ohne dass Abwasser erzeugt wird. Dieser Schritt kann zeitgleich mit der Regeneration der anderen Säulen durchgeführt werden, wenn eine Säule mehr als für die Verbundregeneration notwendig in der Vorrichtung eingesetzt wird. Dies erhöht die Raum-Zeit-Ausbeute der Vorrichtung. Über jeweilige Harzablaufleitungen 14 erfolgt eine Mischung der fertig regenerierten Harzanteile 3, 4 in ein Misch- und Abfüllgut 36. Dazu werden zwei HarzTransportpumpen 12 verwendet, über welche das Mischungsverhältnis präzise einstellbar ist.

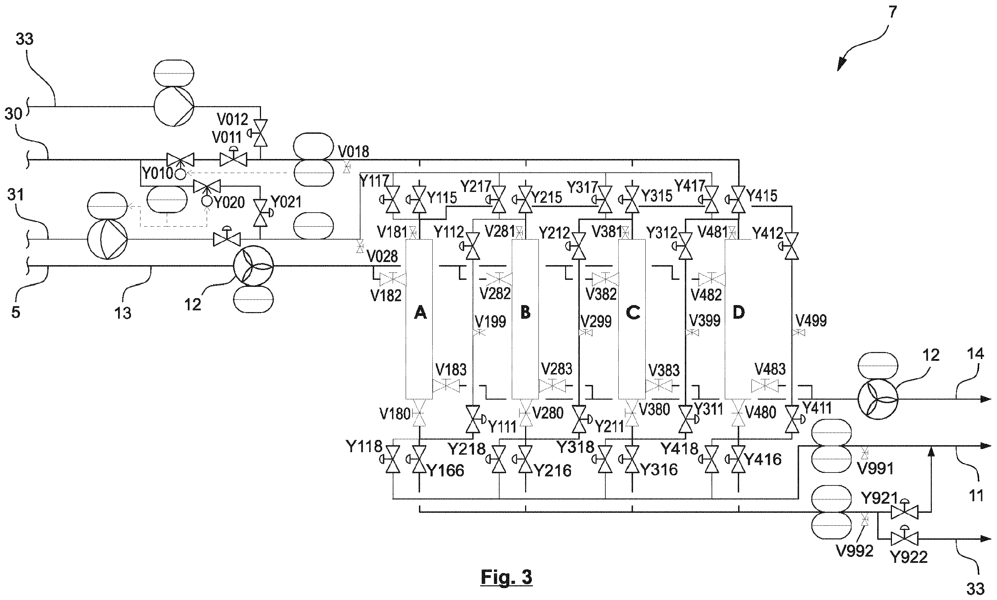

Fig. 3 zeigt eine Ausführungsform einer erfindungsgemäßen AN-Säulenkaskade 7, welche im Wesentlichen baugleich mit einer KAT-Säulenkaskade 8 ist. Diese weist vier Säulen A-D auf, die in Serienschaltung (im Verbund) regeneriert werden. Durch Verwendung von drei oder vier Säulen kann zeitgleich regeneriert und umgefüllt werden, wobei die Chemikalienersparnis bei drei Säulen im Regenerierverbund noch größer als bei zwei Säulen im Regenerierverbund ist, sodass im Ausführungsbeispiel insgesamt vier Säulen A-D verwendet sind.

Die vier AN-Regeneriersäulen A-D weisen jeweils seitliche Harztransportanschlüsse V182-V482 auf. Es ist ein Medienpfad 31 zur In-Line-Verdünnung der konzentrierten NaOH (mit Dosier-Membranpumpe) mit VE-Wasser 30 auf die Gebrauchskonzentration vorgesehen. Ferner ist ein Medienpfad zur Wäsche mit VE-Wasser 30 und für die Kreislaufwäsche 33 mit Kreiselpumpe vorgesehen. Eine Harztransportpumpe 12 dient zur Befüllung einer Säule A-D aus der Trennsäule 2 und eine Harztransportpumpe 12 zur Entleerung einer Säule A-D zur Mischung der Fertigware. Ferner weist die AN-Säulenkaskade eine Ventilanordnung zur beliebigen Reihenschaltung von von links angeströmten 3 der 4 Säulen auf. Darüber hinaus ist eine Ventilanordnung zur mit der Regeneration der drei anderen Säulen zeitgleichen Wäsche und Kreislaufwäsche vorgesehen. Die Umfüllung der vierten Säule wird im gleichen Zeitintervall durchgeführt. Die KAT-Regeneriersäulenkaskade 8 ist in einer baugleichen Anordnung aufgebaut und daher hier nicht extra aufgeführt. Alle Verwendungen von NaOH werden dabei nur durch eine Säure ersetzt. Die KAT- und AN-Regeneration, die Füllung oder Entleerung einer KAT- und einer AN-Säule und die Kreislaufwäsche einer KAT- und einer AN-Säule sind jeweils synchrone und zeitgleiche Vorgänge in beiden Säulenkaskaden 7, 8, die daher vorteilhaft mit einer gemeinsamen Ablaufsteuerung versehen werden.

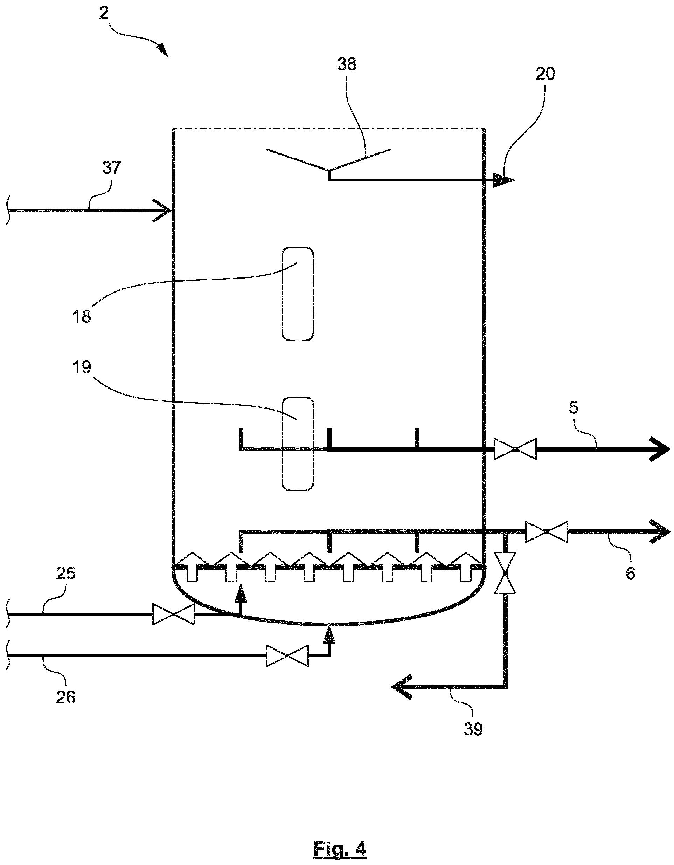

Die Trennsäule gemäß Fig. 4 unterscheidet sich von der der MB-Säule nach dem Stand der Technik darin, dass die Sammeldrainage in der Mitte entfällt. Ferner ist das dritte Fenster zur Rückspülkontrolle durch eine oben offene Bauweise ebenso nicht notwendig. Als zusätzliche Elemente werden die Harzentnahmeleitungen 5, 6 vorgesehen. Als Vereinfachung kann auch ein gemeinsamer Harzentnahmestutzen unten vorgesehen sein, wobei beim Ablassen der getrennten Harze zuerst die KAT-Fraktion, dann die indifferente Mittelfraktion und zum Schluss die AN-Fraktion dort erscheinen. Diese Variante wird jedoch nicht die Trennschärfe einer doppelten Entnahme erreichen, bei der zuerst oben die AN-Fraktion, dann unten die KAT-Fraktion entnommen werden.

Die indifferente Mittelfraktion 9 (aus Fig. 2) kann bei der Doppelabnahme auch in der Säule verbleiben, wenn deren Volumenverhältnis noch ungefähr ordnungsgemäß ist. Sollte sich eine Harzart anreichern, wird eine Rückführung jedoch notwendig, um die spätere Trennlinie immer sicher innerhalb der indifferenten Mittelfraktion zu halten.

Das in Tabelle 1 beispielhaft gezeigte Regenerationsverfahren erfolgt nach folgendem Ablauf, der die erfindungsgemäße Verbundregeneration von beispielhaft 3 Säulen in Serie realisiert:

**Tab. 1 Verfahrensablauf der Regeneration über beispielhaft drei Säulen**

| Schritt | Eingang | Menge | Säulen | Ausgang |
|---|---|---|---|---|
| 1 | Säure/Lauge | 1,2 BV | A -> B -> C | Abwasser |
| 2 | VE-Wasser | 0,5 BV | A -> B -> C | Abwasser |
| 3 | VE-Wasser | 1,5 BV | A | Abwasser |
| 4 | Kreislaufwäsche | bis LF OK | A | (im Kreislauf mit Säule A der anderen Kaskade) |
| 5 | Entleerung | | A | (zusammen mit Säule A der anderen Kaskade) |
| 6 | Neufüllung | | A | aus der Trennsäule |
| 7 | Säure/Lauge | 1,2 BV | B -> C -> A | Abwasser |
| 8 | VE-Wasser | 0,5 BV | C -> A | Abwasser |
| 9 | VE-Wasser | 1,5 BV | B | Abwasser |
| 10 | Kreislaufwäsche | bis LF OK | B | (im Kreislauf mit Säule A der anderen Kaskade) |
| 11 | Entleerung | | B | (zusammen mit Säule A der anderen Kaskade) |
| 12 | Neufüllung | | B | aus der Trennsäule |
| 13 | Säure/Lauge | 1,2 BV | C -> A -> B | Abwasser |
| 14 | VE-Wasser | 0,5 BV | C -> A -> B | Abwasser |
| 15 | VE-Wasser | 1,5 BV | C | Abwasser |
| 16 | Kreislaufwäsche | bis LF OK | C | (im Kreislauf mit Säule A der anderen Kaskade) |
| 17 | Entleerung | | C | (zusammen mit Säule A der anderen Kaskade) |
| 18 | Neufüllung | | C | aus der Trennsäule |

Dieser Ablauf wird synchron in beiden Säulenkaskaden durchgeführt. Dadurch werden die Kreislaufwäsche und die Mischung/Abfüllung auch synchron ermöglicht. Alle Mengenangaben (in BV) sind beispielhaft und nicht erfindungswesentlich.

Durch Zufügung einer vierten Säule können Vorgänge zeitgleich parallel erfolgen, was im in Tabelle 2 gezeigten Ablauf beispielhaft skizziert ist:

**Tab. 2 Verfahrensablauf der Regeneration parallel mit Wäsche, Entleerung und Neufüllung von beispielhaft der vierten Säule**

| | | | | | | | |
|---|---|---|---|---|---|---|---|
| Schritt | Eingang | Menge | Säulen | | | | |
| 1 | Säure/Lauge | 1,2 BV | A-> B -> C | | | | |
| 2 | VE-Wasser | 0,5 BV | A -> B -> C | | | | |
| 3 | Säure/Lauge | 1,2 BV | B -> C -> D | VE-Wasser | 1,5 BV | A | Abwasser |
| | | | | Kreislaufwäs | bis LF OK | A | (im Kreislauf mit Säule A der anderen Kaskade) |
| 4 | VE-Wasser | 0,5 BV | B -> C -> D | Entleerung | | A | (zusammen mit Säule A der anderen Kaskade) |
| | | | | Neufüllung | | A | aus der Trennsäule |
| 5 | Säure/Lauge | 1,2 BV | C -> D -> A | VE-Wasser | 1,5 BV | B | Abwasser |
| | | | | Kreislaufwäs | bis LF OK | B | (im Kreislauf mit Säule A der anderen Kaskade) |
| 6 | VE-Wasser | 0,5 BV | C -> D -> A | Entleerung | | B | (zusammen mit Säule A der anderen Kaskade) |
| | | | | Neufüllung | | B | aus der Trennsäule |
| 7 | Säure/Lauge | 1,2 BV | D -> A -> B | VE-Wasser | 1,5 BV | C | Abwasser |
| | | | | Kreislaufwäs | bis LF OK | C | (im Kreislauf mit Säule A der anderen Kaskade) |
| 8 | VE-Wasser | 0,5 BV | D -> A -> B | Entleerung | | C | (zusammen mit Säule A der anderen Kaskade) |
| | | | | Neufüllung | | C | aus der Trennsäule |
| 9 | Säure/Lauge | BV | A -> B -> C | VE-Wasser | 1,5 BV | C | Abwasser |
| | | | | Kreislaufwäs | bis LF OK | C | (im Kreislauf mit Säule A der anderen Kaskade) |
| 10 | VE-Wasser | 0,5 BV | A -> B -> C | Entleerung | | C | (zusammen mit Säule A der anderen Kaskade) |
| | | | | Neufüllung | | C | aus der Trennsäule |

Durch die geeignete Wahl der Fließgeschwindigkeiten können die Zeitbedarfe der parallel ablaufenden Verfahrensabschnitte möglichst gut angenähert werden. Dies erfolgt mit dem Ziel, möglichst wenig unproduktive Zeit in einzelnen Säulen zu erreichen.

Die Erfindung betrifft damit ein neuartiges Zusammenspiel von Trennung, Regeneration von KAT- und AN-Anteilen in getrennten Säulenkaskaden und anschließender Kreislaufwäsche und erneuter Mischung. Erfindungswesentlich ist die getrennte Regeneration in den Säulenkaskaden, welche eine Verbundregeneration erlaubt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Vorrichtung zur Regeneration von Mischbett-Ionenaustauschern
- 2: Trennsäule
- 3: starkbasische Harzfraktion
- 4: starksaure Harzfraktion
- 5: AN-Harz-Transportausgang
- 6: KAT-Harz-Transportausgang
- 7: AN-Regeneriersäulenkaskade
- 8: KAT-Regeneriersäulenkaskade
- 9: Indifferente Trennschicht
- 10: Waschwasserzulauf
- 11: Waschwasserablauf
- 12: Harztransportpumpe
- 13: Harzzulauf
- 14: Harzablauf
- 15: Fertigware
- 16: Anliefergebinde, Misch- und Abfüllbehälter
- 17: Fenster zur Klassierkontrolle
- 18: Fenster zur Füllkontrolle AN
- 19: Fenster zur Trennkontrolle
- 20: Klassierwasserausgang
- 21: Mannlochdeckel
- 22: Luftauslass
- 23: Rückspülraum
- 24: Gemischtes Harzbett nach Einfüllung
- 25: Lufteingang
- 26: Klassierwassereingang
- 27: Abwasser-Sammeldrainage
- 28: Harztransportflansch Rohware
- 29: Harztransportflansch Fertigware
- 30: VE-Wasser
- 31: Lauge
- 32: Säure
- 33: Kreislaufwäsche
- 34: Kreislaufwaschpumpe
- 35: Kreislaufwaschweg
- 36: Mischung und Abfüllgut
- 37: Harzeingang
- 38: Überlauftrichter
- 39: Harzausgang Rückführung
- A, B, C, D: Regeneriersäulen

## Patentansprüche

1. Vorrichtung (1) zur Regeneration von Mischbett-Ionenaustauschern,
mit einer Trennsäule (2), welche eine starkbasische Harzfraktion (3) und eine starksaure Harzfraktion (4) in einem vordefinierten Volumenverhältnis zueinander sowie voneinander getrennt und übereinander angeordnet aufweist, **dadurch gekennzeichnet, dass** die Vorrichtung einen Harz-Transportausgang (5) für die starkbasische Harzfraktion (3) und einen Harz-Transportausgang (6) für die starksaure Harzfraktion (4) aufweist, wobei die Vorrichtung (1) ferner zwei fluidisch mit dem Harz-Transportausgang (5, 6) verbundene Regeneriersäulenkaskaden (7, 8) aufweist, von denen jede zumindest zwei Regeneriersäulen (A-D) aufweist, wobei die eine Regeneriersäulenkaskade als Anionenaustauscher-Regeneriersäulenkaskade (7) ausgebildet ist, welche zum Regenerieren der starkbasischen Harzfraktion (3) eingerichtet ist, und die andere Regeneriersäulenkaskade als Kationenaustauscher-Regeneriersäulenkaskade (8) ausgebildet ist, welche zum Regenerieren der starksauren Harzfraktion (4) eingerichtet ist.

2. Vorrichtung (1) nach Anspruch 1, wobei einer der Harz-Transportausgänge (5) so angeordnet ist, dass dieser oberhalb einer zwischen der starkbasischen und der starksauren Harzfraktion (3, 4) angeordneten Trennschichtlage (9) in die Trennsäule (2) mündet und dadurch zum Abtransportieren der starkbasischen Harzfraktion (3) eingerichtet ist, und der andere Harz-Transportausgang (6) so angeordnet ist, dass dieser unterhalb der Trennschichtlage (9) von unten in die Trennsäule (2) mündet und dadurch zum Abtransportieren der starksauren Harzfraktion (4) eingerichtet ist.

3. Vorrichtung (1) nach Anspruch 1 oder 2, wobei die zumindest zwei Regeneriersäulen (A-D) der Anionenaustauscher-Regeneriersäulenkaskade (7) und/oder der Kationenaustauscher-Regeneriersäulenkaskade (8) in Reihe geschaltet sind.

4. Vorrichtung (1) nach einem der vorangehenden Ansprüche, wobei die Regeneriersäulenkaskaden (7, 8) jeweils mehr als zwei, beispielsweise drei oder vier, Regeneriersäulen (A-D) aufweisen.

5. Vorrichtung (1) nach Anspruch 3, welche ferner eine Steuereinheit und jede der Regeneriersäulenkaskaden (7, 8) eine Mehrzahl Ventile (Vo11-V992; Y010-Y922) aufweist, wobei durch Ansteuerung der Mehrzahl Ventile (Vo11-V992; Yo10-Y922) mittels der Steuereinheit die Durchströmreihenfolge der Regeneriersäulen (A-D) jeder der Regeneriersäulenkaskaden (7, 8) veränderlich einstellbar ist.

6. Vorrichtung (1) nach einem der vorangehenden Ansprüche, welche zumindest einen Medieneingang (10) und zumindest einen Waschwasserablauf (11) aufweist und welche dazu eingerichtet ist, dass zumindest eine Regeneriersäule (A-D) der Anionenaustauscher-Regeneriersäulenkaskade (7) mit zumindest einer Regeneriersäule (A-D) der Kationenaustauscher-Regeneriersäulenkaskade (8) in einem Kreislauf gewaschen werden kann.

7. Vorrichtung (1) nach einem der vorangehenden Ansprüche, welche zumindest eine Harztransportpumpe (12) und jede der Regeneriersäulenkaskaden (7, 8) einen Harzzulauf (13) und einen Harzablauf (14) aufweist, wobei die Harzabläufe (14) beider Regeneriersäulenkaskaden (7, 8) zur Mischung einer Fertigware (15) zusammengeführt sind und die zumindest eine Harztransportpumpe (12) derart angesteuert sind, dass ein vorbestimmtes Mischungsverhältnis von regeneriertem Anionenaustauscher-Harz (3) und regeneriertem Kationenaustauscher-Harz (4) einstellbar ist.

8. Verfahren zur Regeneration von Mischbett-Ionenaustauschern, aufweisend die Schritte:
Bereitstellen einer mit einer starkbasischen Harzfraktion (3) und einer starksauren Harzfraktion (4) gefüllten Trennsäule (2), in welcher beide Harzfraktionen (3, 4) voneinander getrennt werden, so dass diese übereinander angeordnet sind;
Separates Überführen der starkbasischen Harzfraktion (3) mittels eines ersten Harztransportausgangs (5) aus der Trennsäule (2) in eine zumindest zwei, beispielsweise in Reihe verschaltete, Regeneriersäulen (A-D) aufweisende Anionenaustauscher-Regeneriersäulenkaskade (7) und der starksauren Harzfraktion (4) mittels eines zweiten Harztransportausgangs (6) aus der Trennsäule (2) in eine zumindest zwei, beispielsweise in Reihe verschaltete, Regeneriersäulen (A-D) aufweisende Kationenaustauscher-Regeneriersäulenkaskade (8);
Regenerieren der starkbasischen Harzfraktionen (3) in der Anionenaustauscher-Regeneriersäulenkaskade (7) und Regenerieren der starksauren Harzfraktion (4) in der Kationenaustauscher-Regeneriersäulenkaskade (8).

9. Verfahren nach Anspruch 8, wobei das Überführen der starkbasischen und der starksauren Harzfraktion (3, 4) die Entnahme von etwas weniger als der gesamten starkbasischen Harzfraktion (3) und die Entnahme von etwas weniger als der gesamten starksauren Harzfraktion (4) umfasst und eine zwischen den Harzfraktionen (3, 4) angeordnete Trennschichtlage (9) entweder in der Trennsäule (2) verbleibt oder separat aus der Trennsäule (2) entfernt, beispielsweise in einen der Trennsäule (2) vorgelagerten Behälter (16) zurückgeführt, wird.

10. Verfahren nach einem der Ansprüche 8 oder 9, ferner umfassend ein steuerungstechnisches Weiterschalten der beiden Regeneriersäulenkaskaden (7, 8) jeweils um eine Säule (A-D) nach vorne.

11. Verfahren nach einem der Ansprüche 8 bis 10, wobei das Regenerieren die Einspeisung von Regeneriermittel bezogen auf die zu erreichende Beladekapazität mit einem Regeneriermittelüberschuss zwischen 110 % und 130 % umfasst.

12. Verfahren nach einem der Ansprüche 8 bis 11, ferner umfassend das Einspeisen einer frischen für die Regenerierung vorgesehenen Säure/Lauge jeweils in die zu diesem Zeitpunkt erste Säule (A-D) der jeweiligen Regeneriersäulenkaskade (7, 8).

13. Verfahren nach einem der Ansprüche 8 bis 12, wobei jede Regeneriersäulenkaskade (7, 8) zumindest drei Regeneriersäulen (A-D) umfasst, wobei das Verfahren ferner das zeitgleiche Regenerieren zumindest zweier der Regeneriersäulen (A-D) und das Waschen der zumindest einen weiteren Regeneriersäule (A-D) umfasst.

14. Verfahren nach einem der Ansprüche 8 bis 13, ferner umfassend das Mischen der fertig regenerierten Harzfraktionen (3, 4) mittels zweier Harztransportpumpen (12), dabei Einstellen eines gewünschten Mischungsverhältnisses.

## Claims

1. Apparatus (1) for the regeneration of mixed-bed ion exchangers,
comprising a separation column (2) which contains a strongly basic resin fraction (3) and a strongly acidic resin fraction (4) in a predefined volume ratio to one another, separated from one another and arranged one above the other, **characterised in that** the apparatus comprises a resin transport outlet (5) for the strongly basic resin fraction (3) and a resin transport outlet (6) for the strongly acidic resin fraction (4), wherein the apparatus (1) further comprises regeneration column cascades (7, 8) fluidically connected to the resin transport outlets (5, 6), each of which comprises at least two regeneration columns (A-D), wherein one regeneration column cascade is configured as an anion-exchange regeneration column cascade (7), which is arranged for regenerating the strongly basic resin fraction (3), and the other regeneration column cascade is designed as a cation exchange regeneration column cascade (8), which is arranged for regenerating the strongly acidic resin fraction (4).

2. Apparatus (1) according to claim 1, wherein one of the resin transport outlets (5) is arranged such that it opens into the separation column (2) above a separation layer (9) situated between the strongly basic and strongly acidic resin fractions (3, 4) and is thereby configured to discharge the strongly basic resin fraction (3), and the other resin transport outlet (6) is arranged such that it opens into the separation column (2) from below, below the separation layer (9), and is thereby arranged to discharge the strongly acidic resin fraction (4).

3. Apparatus (1) according to claim 1 or 2, wherein the at least two regeneration columns (A-D) of the anion-exchange regeneration column cascade (7) and/or the cation-exchange regeneration column cascade (8) are connected in series.

4. Apparatus (1) according to one of the preceding claims, wherein the regeneration column cascades (7, 8) each comprise more than two, for example three or four, regeneration columns (A-D).

5. Apparatus (1) according to claim 3, which further comprises a control unit, and each of the regeneration column cascades (7, 8) comprises a plurality of valves (V011-V992; Y010-Y922), wherein the flow sequence through the regeneration columns (A-D) of each of the regeneration column cascades (7, 8) is varied by actuating the plurality of valves (V011-V992; Y010-Y922) by means of the control unit, the flow sequence through the regeneration columns (A-D) of each of the regeneration column cascades (7, 8) is variably adjustable.

6. A device (1) according to any one of the preceding claims, wherein at least one resin transfer pump (12) is provided, and each of the regeneration column cascades (7, 8) comprises a resin inlet (13) and a resin outlet (14), wherein the resin outlets (14) of both regeneration column cascades (7, 8) are combined to produce a finished product (15), and the at least one resin transport pump (12) is controlled in such a way that a predetermined mixing ratio of regenerated anion exchange resin (3) and regenerated cation exchange resin (4) can be set.

7. A device (1) according to any one of the preceding claims, wherein at least one resin transfer pump (12) is provided, and each of the regeneration column cascades (7, 8) comprises a resin inlet (13) and a resin outlet (14), wherein the resin outlets (14) of both regeneration column cascades (7, 8) are combined to produce a finished product (15), and the at least one resin transport pump (12) is controlled in such a way that a predetermined mixing ratio of regenerated anion exchange resin (3) and regenerated cation exchange resin (4) can be set.

8. A method for regenerating mixed-bed ion exchangers, comprising the steps of: providing a separation column (2) filled with a strongly basic resin fraction (3) and a strongly acidic resin fraction (4), in which the two resin fractions (3, 4) are separated from one another such that they are arranged one above the other; separately transferring the strongly basic resin fraction (3) via a first resin transfer outlet (5) from the separation column (2) into an anion exchange resin regeneration column cascade comprising at least two, for example series-connected, regeneration columns (A-D) (7) and the strongly acidic resin fraction (4) via a second resin transport outlet (6) from the separation column (2) into a cation exchange resin regeneration column cascade (8) comprising at least two regeneration columns (A-D), for example connected in series; regenerating the strongly basic resin fractions (3) in the anion exchange resin regeneration column cascade (7) and regenerating the strongly acidic resin fraction (4) in the cation exchange resin regeneration column cascade (8).

9. The method according to claim 8, wherein the transfer of the strongly basic and strongly acidic resin fractions (3, 4) comprises the removal of slightly less than the entire strongly basic resin fraction (3) and the removal of slightly less than the entire strongly acidic resin fraction (4), and a separating layer (9) arranged between the resin fractions (3, 4) either remains in the separation column (2) or is removed separately from the separation column (2), for example being returned to a container (16) upstream of the separation column (2).

10. A method according to any one of claims 8 or 9, further comprising a control-based advancement of the two regeneration column cascades (7, 8) by one column (A-D) each in the forward direction.

11. A method according to any one of claims 8 to 10, wherein the regeneration comprises feeding a regenerating agent, relative to the target loading capacity, with a regenerating agent surplus of between 110% and 130%.

12. A method according to any one of claims 8 to 11, further comprising feeding a fresh acid/alkali intended for regeneration into the respective first column (A-D) of the respective regeneration column cascade (7, 8) at that point in time.

13. A method according to any one of claims 8 to 12, wherein each regeneration column cascade (7, 8) comprises at least three regeneration columns (A-D), wherein the method further comprises the simultaneous regeneration of at least two of the regeneration columns (A-D) and the washing of the at least one further regeneration column (A-D).

14. A method according to any one of claims 8 to 13, further comprising mixing the fully regenerated resin fractions (3, 4) by means of two resin transfer pumps (12), thereby setting a desired mixing ratio.

## Revendications

1. Dispositif (1) destiné à la régénération d'échangeurs d'ions à lit mixte,
comprenant une colonne de séparation (2) qui comporte une fraction de résine fortement basique (3) et une fraction de résine fortement acide (4), disposées l'une au-dessus de l'autre, séparées l'une de l'autre et dans un rapport volumique prédéfini, **caractérisé en ce que** le dispositif comporte une sortie de transport de résine (5) pour la fraction de résine fortement basique (3) et une sortie de transport de résine (6) pour la fraction de résine fortement acide (4), le dispositif (1) comportant en outre deux cascades de colonnes de régénération (7, 8) reliées fluidiquement à la sortie de transport de résine (5, 6), dont chacune comporte au moins deux colonnes de régénération (A-D), l'une des cascades de colonnes de régénération étant conçue comme une cascade de colonnes de régénération à échangeurs d'anions (7), qui est agencée pour régénérer la fraction de résine fortement basique (3), et l'autre cascade de colonnes de régénération est conçue comme une cascade de colonnes de régénération à échangeurs cationiques (8), qui est agencée pour régénérer la fraction de résine fortement acide (4).

2. Dispositif (1) selon la revendication 1, dans lequel l'une des sorties de transport de résine (5) est disposée de telle sorte qu'elle débouche dans la colonne de séparation (2) au-dessus d'une couche de séparation (9) située entre les fractions de résine fortement basique et fortement acide (3, 4), et est ainsi configurée pour évacuer la fraction de résine fortement basique (3), et l'autre sortie de transport de résine (6) est disposée de telle sorte qu'elle débouche dans la colonne de séparation (2) par le bas, en dessous de la couche de séparation (9), et est ainsi agencée pour évacuer la fraction de résine fortement acide (4).

3. Dispositif (1) selon la revendication 1 ou 2, dans lequel les au moins deux colonnes de régénération (A-D) de la cascade de colonnes de régénération d'échangeurs d'anions (7) et/ou de la cascade de colonnes de régénération d'échangeurs de cations (8) sont montées en série.

4. Dispositif (1) selon l'une des revendications précédentes, dans lequel les cascades de colonnes de régénération (7, 8) comportent chacune plus de deux, par exemple trois ou quatre, colonnes de régénération (A-D).

5. Dispositif (1) selon la revendication 3, qui comprend en outre une unité de commande et dans lequel chacune des cascades de colonnes de régénération (7, 8) comporte une pluralité de vannes (V011-V992 ; Y010-Y922), l'ordre de passage à travers les colonnes de régénération (A-D) de chacune des cascades de colonnes de régénération (7, 8) étant modifié au moyen de l'unité de commande par l'actionnement de la pluralité de vannes (V011-V992 ; Y010-Y922) au moyen de l'unité de commande, l'ordre de passage à travers les colonnes de régénération (A-D) de chacune des cascades de colonnes de régénération (7, 8) est réglable de manière variable.

6. Dispositif (1) selon l'une des revendications précédentes, qui comporte au moins une entrée de fluide (10) et au moins une sortie d'eau de lavage (11) et qui est agencé de telle sorte qu'au moins une colonne de régénération (A-D) de la cascade de colonnes de régénération d'échangeurs d'anions (7) comprenant au moins une colonne de régénération (A-D) de la cascade de colonnes de régénération d'échangeurs cationiques (8) puisse être lavée dans un circuit.

7. Dispositif (1) selon l'une des revendications précédentes, dans lequel au moins une pompe de transport de résine (12) est prévue et chacune des cascades de colonnes de régénération (7, 8) comporte une entrée de résine (13) et une sortie de résine (14), les sorties de résine (14) des deux cascades de colonnes de régénération (7, 8) sont réunies pour le mélange d'un produit fini (15) et la au moins une pompe de transport de résine (12) est commandée de telle sorte qu'un rapport de mélange prédéterminé entre la résine échangeuse d'anions régénérée (3) et la résine échangeuse de cations régénérée (4) puisse être réglé.

8. Procédé de régénération d'échangeurs d'ions à lit mixte, comprenant les étapes suivantes :
mise à disposition d'une colonne de séparation (2) remplie d'une fraction de résine fortement basique (3) et d'une fraction de résine fortement acide (4), dans laquelle les deux fractions de résine (3, 4) sont séparées l'une de l'autre, de sorte qu'elles sont disposées l'une au-dessus de l'autre ;
transférer séparément la fraction de résine fortement basique (3) de la colonne de séparation (2) vers une cascade de colonnes de régénération d'échangeurs d'anions comprenant au moins deux colonnes de régénération (A-D), par exemple montées en série, au moyen d'une première sortie de transport de résine (5) (7) et de la fraction de résine fortement acide (4) au moyen d'une deuxième sortie de transport de résine (6) depuis la colonne de séparation (2) vers une cascade de colonnes de régénération d'échangeurs cationiques (8) comprenant au moins deux colonnes de régénération (A-D), par exemple montées en série ;
régénération des fractions de résine fortement basiques (3) dans la cascade de colonnes de régénération à échangeurs d'anions (7) et régénération de la fraction de résine fortement acide (4) dans la cascade de colonnes de régénération à échangeurs de cations (8).

9. Procédé selon la revendication 8, dans lequel le transfert des fractions de résine fortement basique et fortement acide (3, 4) comprend le prélèvement d'un peu moins de la totalité de la fraction de résine fortement basique (3) et le prélèvement d'un peu moins de la totalité de la fraction de résine fortement acide (4), et une couche de séparation (9) disposée entre les fractions de résine (3, 4) soit reste dans la colonne de séparation (2), soit est retirée séparément de la colonne de séparation (2), par exemple pour être renvoyée dans un récipient (16) situé en amont de la colonne de séparation (2).

10. Procédé selon l'une des revendications 8 ou 9, comprenant en outre une commutation, par des moyens de commande, des deux cascades de colonnes de régénération (7, 8) chacune d'une colonne (A-D) vers l'avant.

11. Procédé selon l'une des revendications 8 à 10, dans lequel la régénération comprend l'injection d'un agent de régénération, par rapport à la capacité de charge à atteindre, avec un excès d'agent de régénération compris entre 110 % et 130 %.

12. Procédé selon l'une des revendications 8 à 11, comprenant en outre l'introduction d'un acide/d'une base frais(se) destiné(e) à la régénération respectivement dans la première colonne (A-D) à ce moment-là de la cascade de colonnes de régénération respective (7, 8).

13. Procédé selon l'une des revendications 8 à 12, dans lequel chaque cascade de colonnes de régénération (7, 8) comprend au moins trois colonnes de régénération (A-D), le procédé comprenant en outre la régénération simultanée d'au moins deux des colonnes de régénération (A-D) et le lavage de la au moins une autre colonne de régénération (A-D).

14. Procédé selon l'une des revendications 8 à 13, comprenant en outre le mélange des fractions de résine régénérées (3, 4) à l'aide de deux pompes de transport de résine (12), tout en ajustant un rapport de mélange souhaité.
